**Europäisches Patentamt**

(19) **European Patent Office**

**Office européen des brevets**

(11) Numéro de publication: **0 017 551**

**B1**

(12) **FASCICULE DE BREVET EUROPEEN**

(45) Date de publication du fascicule de brevet: **04.11.81**

(51) Int. Cl.³: **G 21 C 17/00,**
**G 21 C 17/08**

(21) Numéro de dépôt: **80400384.6**

(22) Date de dépôt: **21.03.80**

(54) Dispositif d'inspection télévisuelle de la surface intérieure d'une enceinte cylindrique.

(30) Priorité: **30.03.79 FR 7908005**

(43) Date de publication de la demande:
**15.10.80 Bulletin 80/21**

(45) Mention de la délivrance du brevet:
**04.11.81 Bulletin 81/44**

(84) Etats Contractants Désignés:
**BE DE GB IT SE**

(56) Documents cités:

**BE - A - 861 842**
**FR - A - 1 159 321**
**FR - A - 2 128 556**
**GB - A - 875 376**
**GB - A - 883 661**
**GB - A - 1 401 469**
**US - A - 3 712 481**
**US - H - T 980 001**

(73) Titulaire: **Framatome**
**Tour Fiat 1 place de la Coupole**
**F-92400 Courbevoie (FR)**

(72) Inventeur: **Gillot, Georges**
**17 rue George Sand**
**F-59290 Wasquehal (FR)**

(74) Mandataire: **Bouget, Lucien et al,**
**CREUSOT-LOIRE 15 rue Pasquier**
**F-75383 Paris Cedex 08 (FR)**

Dispositif d'inspection télévisuelle de la surface intérieure d'une enceinte cylindrique

L'invention concerne un dispositif d'inspection télévisuelle de la surface intérieure d'une enceinte cylindrique fermée à axe vertical ayant un trou d'accès à sa partie supérieure selon le préambule de la revendication 1.

Dans le domaine de la construction des centrales nucléaires, il est nécessaire de contrôler l'état du revêtement intérieur d'enceintes de grande dimension et plus particulièrement de grande hauteur qui ne comportent qu'une ouverture ou trou d'homme disposée à leur partie supérieure. C'est ainsi qu'il est nécessaire de réaliser l'inspection du revêtement intérieur des pressuriseurs disposés sur le circuit primaire du réacteur pour réguler la pression de l'eau de ce circuit.

Pour les réacteurs nucléaires à eau pressurisée fabriqués actuellement, le pressuriseur se présente sous la forme d'une enceinte cylindrique fermée par deux fonds sphériques d'une hauteur voisine de 12 mètres, dont le fond inférieur comporte des traversées pour des cannes chauffantes et dont le fond supérieur comporte une ouverture obturable ou trou d'homme pour permettre d'accéder à l'intérieur du pressuriseur pour l'entretien ou la réparation de ce pressuriseur.

Il est nécessaire de vérifier l'état du revêtement intérieur du pressuriseur dans sa partie cylindrique depuis la plaque supérieure de maintien des cannes chauffantes jusqu'à la soudure du fond hémisphérique supérieur sur le corps cylindrique du pressuriseur.

Cette opération d'inspection est faite au moyen d'une caméra munie d'un ou plusieurs projecteurs permettant d'éclairer l'intérieur du pressuriseur, introduite par l'ouverture du fond supérieur du pressuriseur et suspendue à son câble d'alimentation.

La tête de la caméra est équipée d'un miroir rotatif permettant une visée radiale sur toute la surface intérieure du pressuriseur. Le miroir est mis en rotation par un moteur électrique annexe monté sur la caméra.

Un tel système présente certains inconvénients car la mise en rotation du moteur provoque un mouvement pendulaire de la caméra et donc une mauvaise stabilité de l'image fournie.

D'autre part l'image obtenue par réflexion dans le miroir est une image renversée de la paroi du pressuriseur et le miroir étant animé d'un mouvement rotatif continu, l'image est une image mobile dont il est difficile d'étudier précisément les détails. Pour toutes ces raisons, le champ utile de vision est réduit, ce qui rend malaisé les opérations d'inspection de la surface interne du pressuriseur.

De même, il n'est pas possible de connaître avec les dispositifs existant actuellement l'altitude exacte de l'image transmise par la caméra et sa position angulaire à un instant donné.

Le but de l'invention est donc de proposer un dispositif d'inspection télévisuelle de la surface intérieure d'une enceinte cylindrique fermée à axe vertical et ayant un trou d'accès à sa partie supérieure, comportant une caméra de télévision et au moins un projecteur pour l'éclairage de la zone à inspecter, fixés à des moyens de suspension comprenant les câbles d'alimentation électriques de la caméra et du projecteur, ce dispositif devant permettre une inspection de la surface interne de l'enceinte par fourniture d'une image stable correspondant à une portion notable de la surface intérieure de l'enceinte et dont la position est aisément repérable, aussi bien en ce qui concerne l'altitude qu'en ce qui concerne la position angulaire.

Dans ce but, le dispositif suivant l'invention comporte:

— un tube flexible à l'une des extrémités duquel est suspendue la caméra et dans lequel passent les câbles d'alimentation électrique.

— un guide tubulaire rigide pénétrant dans l'enceinte par le trou d'accès, dont la portion terminale dans l'enceinte est verticale pour le guidage et l'orientation du tube flexible sur son parcours depuis l'extérieur jusqu'à l'intérieur de l'enceinte,

— un moyen d'entrainement en rotation du tube flexible autour de son axe, situé à l'extérieur de l'enceinte,

— un moyen de retenue du tube et de la caméra à l'encontre des mouvements de translation, déblocable pour le déplacement vertical de la caméra et situé à l'extérieur de l'enceinte,

— des moyens de repérage précis de la position angulaire et de la position verticale de la caméra et un dispositif de centrage situé au-dessus de la caméra, libre en rotation et prenant appui sur la paroi de l'enceinte, le tube flexible étant rigide en torsion pour transmettre exactement les mouvements de rotation du moyen d'entrainement à la caméra.

On va maintenant décrire à titre d'exemple non limitatif un mode de réalisation d'un dispositif d'inspection télévisuelle suivant l'invention, applicable à l'inspection de la surface intérieure d'un pressuriseur d'un réacteur nucléaire à eau pressurisée.

La figure 1 représente une vue en élévation d'un dispositif d'inspection suivant l'invention en position de travail dans un pressuriseur de réacteur nucléaire représenté en coupe.

La figure 2 représente une vue en coupe par un plan verticale des dispositifs de mise en rotation, de blocage et de repérage de position de la caméra.

Les figures 3, 4 et 5 représentent le dispositif dans différentes positions à l'intérieur de l'enceinte du pressuriseur, lors de la mise en place du dispositif de centrage porté par la caméra

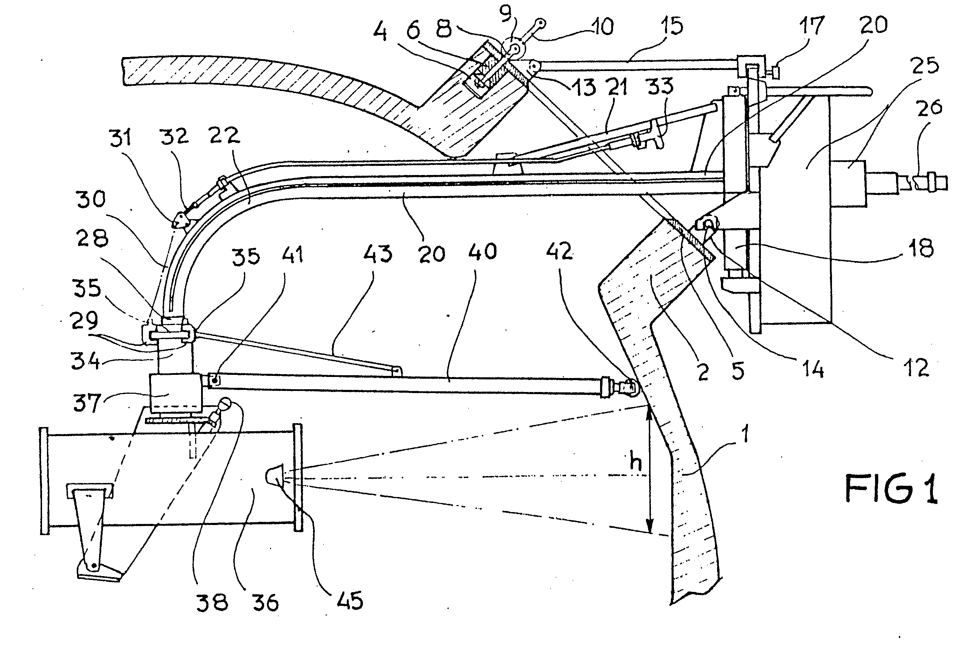

Sur la figure 1, on voit la partie supérieure de forme sensiblement hémispherique 1 d'un pressuriseur d'un réacteur nucléaire à eau sous pression comportant une ouverture 2 ou trou d'homme sur laquelle on a disposé le support d'un dispositif d'inspection de la surface intérieure du pressuriseur qui sera décrit ci-après.

Pour la fixation de ce support on utilise les trous de goujon tels que 4 servant lorsque le pressuriseur est en fonctionnement pour la fixation de la plaque de fermeture de l'ouverture 2.

Le support du dispositif d'inspection comporte une couronne 5 qu'on vient fixer de façon amovible sur l'ouverture 2 par introduction dans les trous de goujons de cette ouverture, de blocs en caoutchouc tels que 6 traversés par une vis de fixation 8 les reliant au travers de la couronne 5 à un excentrique 9 manoeuvrable grâce à une poignée 10 pour la fixation par expansion radiale du bloc de caoutchouc ou pour le démontage du dispositif par relàchement de la pression sur le bloc de caoutchouc.

Sur la couronne 5 sont montés des supports tels que 12 ou 13, les supports tels que 12 étant solidaires d'axes tels que 14 sur lesquels vient reposer la structure 18 du dispositif d'inspection et les supports 13 portant de façon articulée des bras tels que 15 dont l'autre extrémité est reliée par l'intermédiaire de vis moletées telles que 17 à la partie supérieure du bâti 18.

Le conduit de guidage rigide 20 est fixé sur le bâti 18 par l'intermédiaire d'une structure 21 et pénètre par l'ouverture 2 du pressuriseur horizontalement jusqu'au niveau d'un coude 22 qui fait prendre une direction verticale à l'extrémité du conduit de guidage 20 à l'intérieur de l'enceinte.

Le bâti 18 porte également l'ensemble 25 permettant la mise en rotation du tube flexible 26 portant la caméra dont l'extrémité située à l'extérieur de l'enceinte est visible sur la figure 1.

Le dispositif 25 compörte également le moyen de blocage du tube flexible 26 à l'encontre des mouvements de translation entrainant un mouvement vertical de la caméra dans l'enceinte.

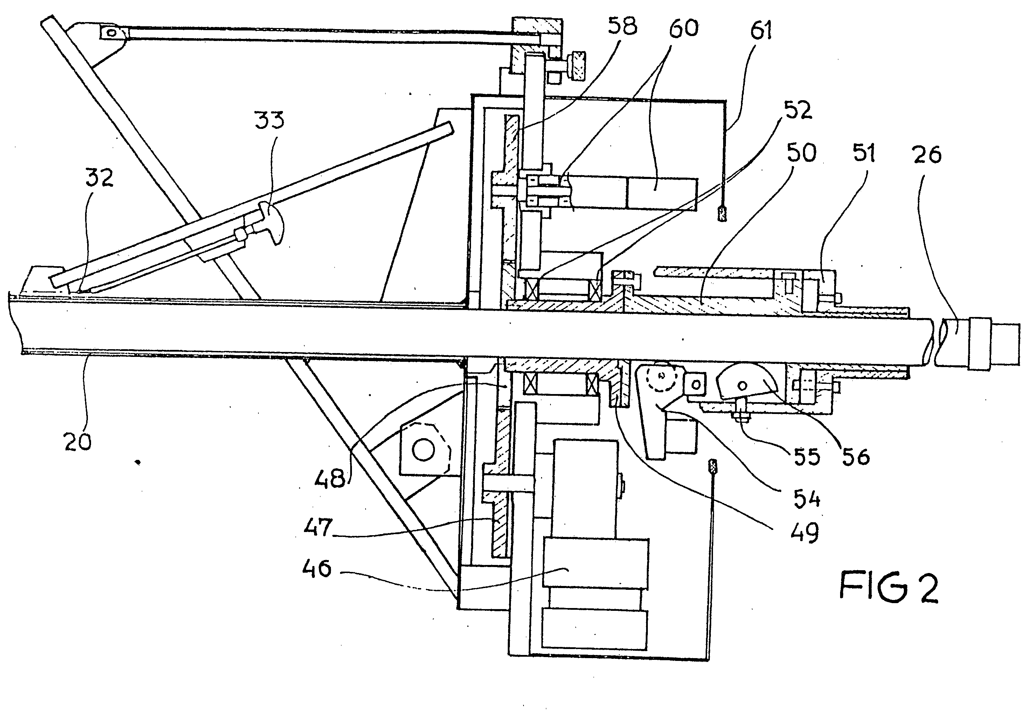

Le dispositif 25 sera décrit plus en détail en se référant à la figure 2.

A son extrémité disposée à l'intérieur de l'enceinte, le tube de guidage 20 est solidaire d'un embout 28 sur lequel sont fixés des crochets 29 articulés autour d'axes horizontaux, leurs mouvements en rotation autour de ces axes pouvant être provoqués par traction sur un câble 30 réuni à une pièce de manoeuvre 31 elle-même actionnée par un câble 32 relié à son extrémité à une poignée 33 disposée à l'extérieur de l'enceinte, ce qui permet de manoeuvrer les crochets 29 depuis une position voisine de l'ouverture dans la partie supérieure du pressuriseur. Lorsqu'ils sont en position basse les crochets 29 sont en prise sur une collerette 35 disposée à la partie supérieure d'une pièce tubulaire 34 qui lorsqu'elle est dans la position représentée à la figure 1 où les crochets 29 la solidarisent de l'embout 28, se trouve dans le prolongement de la partie verticale du guide 20 et laisse un libre passage au tube flexible 26 portant à son extrémité à l'intérieur de l'enceinte, la caméra 36.

La caméra 36 est réunie à l'extrémité du tube 26 par l'intermédiaire d'un support tubulaire 37 dont la partie inférieure permet une fixation amovible de la caméra grâce à un levier d'accrochage 38.

Le tube 26 est constitué par une partie interne tubulaire et présentant des ondes favorisant une déformation du tube par flexion, par exemple au niveau du coude 22 du guide 20 et une couche externe constituée par une double tresse métallique améliorant la résistance du tube.

Un tel tube disponible dans le commerce, de très grande résistance, permet de suspendre la caméra de façon extrêmement sûre et de faire effectuer au tube de suspension de la caméra un parcours comportant des coudes tels que le coude 22 du guide 20.

Nous verrons également qu'un tel tube permet de transmettre des mouvements de rotation suivant sa longueur de façon extrêmement précise, ce tube ne subissant pratiquement aucune déformation sous des efforts de torsion modérés.

Le support 37 de la caméra et la pièce tubulaire 34 portent également le dispositif de centrage constitué par trois bras tels que 40 articulés en 41 sur le support 37 et comportant à leur extrémité non reliée au support 37 des roulettes 42 destinées à venir en contact avec la surface interne de l'enceinte lors des déplacements de la caméra.

Chacun des bras 40 est relié à une tige 43 articulée à l'une de ses extrémités sur le bras 40 et à son autre extrémité sur la collerette 35 de la pièce tubulaire 34.

La base de la pièce 34 est enfilée sur la partie supérieure du support 37 lorsque la caméra est en position entièrement remontée comme représentée à la figure 1. Dans cette position, les bras 40 sont déployés de façon que les roulettes 42 soient en contact avec la surface interne de l'enceinte du pressuriseur.

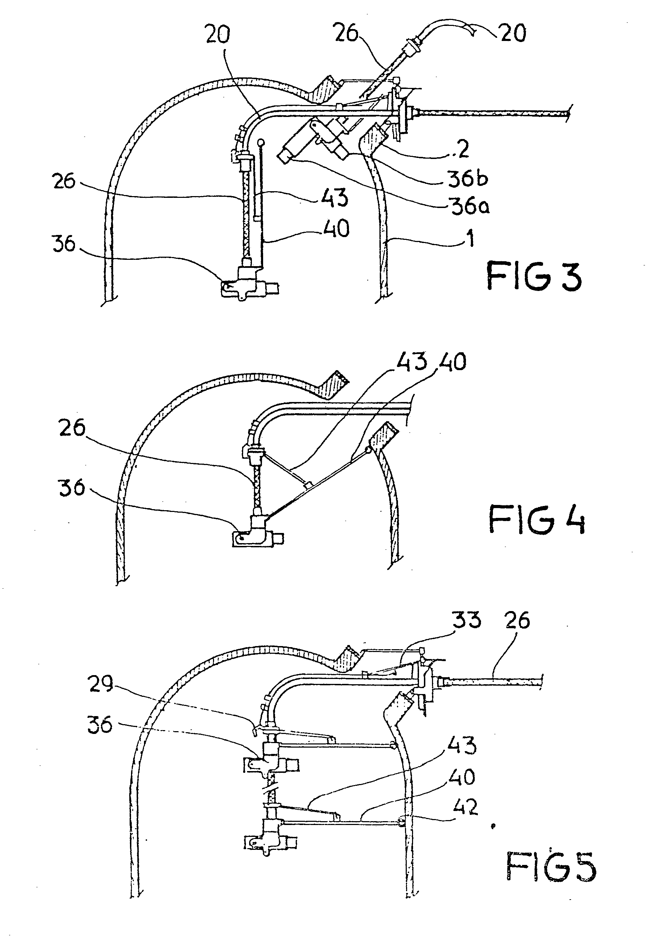

Nous verrons ci-dessous, dans la description des figures 3, 4 et 5 le fonctionnement du dispositif de déploiement des bras 40 au moment où l'on introduit la caméra dans le pressuriseur.

La caméra 36 porte également à la partie supérieure deux projecteurs 45 permettant d'éclairer la zone inspectée par la caméra.

Nous allons maintenant décrire le dispositif d'entrainement en rotation du tube flexible portant la caméra et le dispositif de blocage en translation de ce tube en nouse référant à la figure 2.

Sur la figure 2, on voit en coupe et à plus grande échelle que sur la figure 1 le montage du tube flexible 26 au niveau du dispositif de mise en rotation et de blocage 25. Le dispositif de mise en rotation est constitué par un motoréducteur 46 dont l'arbre de sortie est solidaire d'un pignon 47 qui engrène avec un pignon 48 lui-même solidaire d'un équipage mobile en trois parties 49, 50 et 51.

La partie 49 est un manchon solidaire du pignon 48 montée rotative dans le bâti du dispositif de mise en rotation par l'intermédaire de roulements 52. La partie 50 solidaire du manchon 49 de forme tubulaire porte un dispositif 54 permettant la détermination précise de la position verticale de la caméra ainsi qu'il sera décrit ci-dessous. Cette pièce tubulaire 50 porte également le dispositif de blocage du tube flexible en translation constituée par le manchon 51 monté à glissement sur la pièce tubulaire 50 muni de vis 55 dont l'extrémité dirigé vers l'intérieur du manchon 51 vient en contact, lors des mouvements du manchon suivant la direction axiale, par rapport à la pièce 50, avec une pièce de blocage du tube flexible 56 montée excentrée, de façon que le mouvement axial du manchon 31 puisse venir mettre la pièce de blocage en position de serrage contre le tube flexible 26 ou au contraire dans une position permettant un libre déplacement du tube 26 à l'intérieur de la pièce tubulaire 50.

En réalité, sur la pièce 51 sont disposés régulièrement espacés sur la surface latérale de ce manchon trois dispositifs de blocage analogues au dispositif (55, 56).

On voit donc que par simple mouvement axial de la pièce 51 effectué manuellement on bloque le tube flexible 26 à l'intérieur de la pièce 50, ce qui interdit les mouvements du tube 26 à l'intérieur du tube guide 20 et donc les mouvements verticaux de la caméra à l'intérieur de l'enceinte.

Dans cette position également, le tube 26 solidaire de la pièce tubulaire 50 et du manchon 49 peut être entrainé en rotation lors de la mise en fonctionnement du motoréducteur 46.

Le pignon 48 entraine également un pignon secondaire 58 entrainant lui-même un système de codage optique qui permet une mesure extrêmement précise de la position angulaire du tube 26 et donc de la caméra, puisque, le tube 26 étant très peu déformable en torsion, la caméra suit exactement les mouvements de rotation du tube flexible 26 à l'intérieur de l'enceinte. En effet, les efforts de torsion nécessaires pour entrainer la caméra en rotation sont extrêmement faibles et sous ces efforts le tube 26 ne subit aucune déformation, si bien que la rotation du tube 26 est exactement reproduite par la caméra.

La mesure effectuée au niveau du codeur optique 60 permet donc une connaissance extrêmement précise de la position angulaire de la caméra à l'intérieur de l'enceinte.

Le motoréducteur 46 et les pignons 47 et 48 sont prévus de façon que le rotation totale de la caméra puisse avoir une amplitude de 370° avant qu'il ne se produise une inversion du sens de rotation, cette rotation un peu supérieure à un tour complet permettant d'obtenir un balayage avec un léger recouvrement ce qui garantit un balayage total de la surface interne de l'enceinte du pressuriseur pour chacune des altitudes à laquelle on a disposé la caméra.

Le motoréducteur 46 équipé d'un variateur permet d'obtenir une vitesse de rotation de la caméra extrêmement lente, avec des variations de vitesse assez importantes si on le désire.

On peut donc effectuer pour chaque altitude à laquelle se trouve la caméra une inspection de la paroi sur une hauteur h visible à la figure 1.

Lorsque l'inspection est terminée sur une bande de hauteur h, on débloque le dispositif 51 en le manoeuvrant dans la direction axiale et l'on vient mettre la caméra dans une nouvelle position en altitude en agissant manuellement sur le tube 26 soit pour la remontée soit pour la descente. Le dispositif de repérage 54 comportant des galets entrainés en rotation lorsque le tube 26 se déplace en translation, permet d'obtenir la lecture directe de la position de la caméra en altitude avec une très grande précision.

Il est ainsi possible d'effectuer un balayage en hauteur de toute l'enceinte du pressuriseur en opérant par déplacements successifs de la caméra en altitude, avec un recouvrement entre chacune des hauteurs h explorées, ce recouvrement pouvant être par exemple de l'ordre de 1mm.

L'ensemble du dispositif de mise en rotation est protégé par un capot 61 qui laisse visible le compteur d'altitude que l'opérateur doit consulter pour la mise en place de la caméra aux différentes hauteurs aux-quelles on réalise l'inspection.

En se référant aux figures 3, 4 et 5, on va maintenant décrire le fonctionnement des moyens de mise en place du dispositif de centrage qui a été décrit en se référant à la figure 1.

On voit sur la figure 3, l'ensemble du dispositif comportant le tube flexible 26 et la caméra 36 dans ses positions 36a et 36b, la position 36a correspondant à la position permettant l'introduction de la caméra par l'ouverture 2 et la position 36b correspondant à la position de travail de cette caméra.

Lorsqu'on introduit l'appareil d'inspection dans le pressuriseur, la caméra est en position 36a et le tube 26 est sorti du dispositif de guidage 20 d'une certaine longueur permettant le maintien du dispositif de centrage dans une position repliée, la pièce tubulaire 34 restant solidaire de la base du tube de guidage 20, les crochets 29 étant en position de prise sur la collerette 35 de la pièce 34.

On place alors la caméra, son tube flexible de soutien 26 et le tube de guidage 20 à l'intérieur de l'enceinte 1 ainsi qu'il est représenté sur la figure 3, le dispositif de centrage 40 étant toujours en position repliée. On effectue alors la fixation du tube de soutien sur l'ouverture 2 grâce aux dispositifs de fixation qui on été décrits.

Après avoir débloqué le dispositif 51, 55, 56 de maintien du tube contre les déplacements en translation, on remonte la caméra manuellement en tirant sur le tube 26 ainsi qu'il est représenté sur la figure 4. Les tiges d'articulation telles que 43 permettent de déplier les bras tels que 40.

Lorsque la caméra est entièrement remontée ainsi qu'il est visible à la figure 5 partie supérieure, on libère les crochets 29 en tirant sur la poignée 33 accessible depuis le poste de contrôle extérieur à l'enceinte.

Le déblocage des crochets 29 permet de libérer la pièce tubulaire 34 qui vient reposer sur la partie supérieure du support 37 de la caméra 36.

Lorsqu'on fait descendre la caméra en laissant partir le tube 26 à l'intérieur du tube de guidage 20 sous l'effet du poids de la caméra, la pièce tubulaire 34 accompagnant la caméra et son support dans leur déplacement maintient en position déployée où les roulettes 42 sont en contact avec la paroi interne du pressuriseur, les bras 40 du dispositif de centrage.

Pour avoir un dispositif de centrage léger et rigide, on utilise pour la fabrication des bras 40 des tubes en aluminium.

Pour chacune de ses positions en altitude, la caméra sera ainsi parfaitement centrée dans le pressuriseur, la longueur des bras étant prévue pour que lorsque ces bras sont entièrement déployés, les roulettes 42 soient en contact avec la surface interne du pressuriseur pour chacun des trois bras, à l'endroit où cette enceinte a son diamètre maximum.

Lorsque l'inspection du pressuriseur est terminée et que la caméra est remontée, on remet en place les crochets 29 qui solidarisent la pièce tubulaire 34 de la base 35 du tube de guidage 20 et l'on fait redescendre la caméra et le tube 26 sur une longueur suffisante pour replier entièrement le dispositif de centrage avant de démonter la fixation du tube de guidage 20 sur l'ouverture 2 du pressuriseur. Il suffit alors de glisser le tube 20 par l'ouverture pour ressortir la caméra qui peut être mise manuellement en position 36a pour son extraction complète par l'ouverture 2 du pressuriseur 1.

Pour les opérations d'inspection sur les pressuriseurs des réacteurs à eau pressurisée construits actuellement, il est nécessaire d'avoir un tube flexible à gaine intérieure en acier inoxydable ondulé d'une longueur voisine de 12 mètres.

L'inspection se fait généralement depuis le bas du pressuriseur jusqu'à sa partie supérieure en remontant la caméra par paliers successifs ainsi qu'il a été expliqué plus haut.

Pour l'éclairage de la zone inspectée, on utilise généralement deux projecteurs 45 alimentés en courant basse tension et situés de part et d'autre de la caméra dans un plan horizontal disposé à la hauteur de l'objectif.

Ainsi l'image transmise en direct à l'opérateur chargé de l'inspection permet un contrôle immédiat et eficace de chacune des zones explorées par cette caméra.

Le repérage des zones inspectées est extrêmement précis car le codeur optique 60, lors de la rotation de la caméra, émet une information tous les dixièmes de degré d'angle de rotation de cette caméra si bien que toutes les positions successives sont repérées exactement.

De même la position en altitude de la caméra est connue avec une grande précision grâce au dispositif à galets 54.

Les avantages de l'invention qui apparaissent clairement dans la description du dispositif d'inspection tel que représenté sur les figures 1 et 2, sont que le dispositif de mise en rotation de la caméra disposé à l'extérieur de l'enceinte transmet grâce au tube flexible indéformable en torsion, des rotations connues avec une très grande précision et sans engendrer de mouvements parasites de la caméra, que cette position est fixée de façon précise dans les directions radiales grâce au dispositif de centrage et que la position en altitude est elle-même connue de façon très précise.

De cette façon, on obtient une image stable dont la position à l'intérieur de l'enceinte est parfaitement repérée.

D'autre part la structure du dispositif et sa mise en oeuvre sont particulièrement simples, si bien que les opérations d'inspection de revêtement intérieur du pressuriseur peuvent être effectuées en un temps relativement court.

C'est ainsi qu'on a décrit un dispositif où les mouvements verticaux étaient réalisés manuellement mais il est également possible de prévoir une motorisation pour effectuer ces mouvements, par exemple grâce à un entrainement à galets frottant sur le tube flexible pour les déplacements en translation de ce tube.

On a décrit des mopyens de centrage à bras articulés particulièrement simples mais on peut imaginer également d'autres dispositifs de centrage utilisant des moyens mécaniques, hydrauliques ou pneumatiques différents des moyens décrits.

De même, les moyens de repérage de la position angulaire et de la position en altitude de la caméra peuvent être de type différent de ceux qui ont été décrits.

Le dispositif de guidage du tube flexible peut avoir une forme différente de celle envisagée dans la description et son mode de fixation sur l'ouverture de l'enceinte à inspecter peut être également différent.

Le tube flexible décrit comportant une gaine intérieure en acier inoxydable présentant des ondes permettant à ce tube une bonne déformation en flexion et une grande rigidité en torsion peut être remplacé par tout autre tube flexible et ayant une rigidité suffisante en torsion pour transmettre exactement les mouvements de rotation du moyen d'entrainement à la caméra.

Enfin, le dispositif suivant l'invention peut s'appliquer non seulement à l'inspection d'un pressuriseur d'un réacteur nucléaire à eau pressurisée mais encore à l'inspection de toute enceinte cylindrique fermée de grande dimension à axe vertical et ayant un trou d'accès à sa partie supérieure, de telles enceintes pouvant être utilisées dans l'industrie chimique ou dans l'industrie de la production d'énergie. Ce dispositif peut être employé dans toutes activités de chaudronnerie.

## Revendications

1. Dispositif d'inspection télévisuelle de la surface intérieure d'une enceinte cylindrique fermée à axe vertical ayant un trou d'accès à sa partie supérieure, comportant une caméra de télévision et au moins un projecteur pour l'éclairage de la zone à inspecter fixés à des moyens de suspension comprenant des câbles d'alimentation électrique de la caméra et du projecteur, caractérisé par le fait qu'il comporte:

— un tube flexible (26) à une des extrémités duquel est suspendue la caméra (36) et dans lequel passent les câbles d'alimentation électrique,

— un guide tubulaire rigide (20) pénétrant dans l'enceinte (1) par le trou d'accès (2), dont la portion terminale dans l'enceinte (1) est verticale, pour le guidage et l'orientation du tube flexible (26) sur son parcours depuis l'extérieur jusqu'à l'intérieur de l'enceinte (1),

— un moyen d'entrainement en rotation (25) du tube flexible (26) autour de son axe, situé à l'extérieur de l'enceinte (1),

— un moyen de retenue (51, 55, 56) du tube (26) et de la caméra (36) à l'encontre des mouvements de translation, déblocable pour le déplacement vertical de la caméra (36) et situé à l'extérieur de l'enceinte (1),

— des moyens (60 et 54) de repérage précis de la position angulaire et de la position verticale de la caméra (36),

— et un dispositif de centrage (40, 42, 43) situé au-dessus de la caméra (36) libre en rotation et prenant appui sur la paroi de l'enceinte (1), le tube flexible (26) étant rigide en torsion pour transmettre exactement les mouvements de rotation du moyen d'entrainement (25) à la caméra (36).

2. Dispositif d'inspection télévisuelle suivant la revendication 1, caractérisé par le fait que le dispositif de centrage porté par la caméra est constitué par un ensemble de bras (40) et de préférence par trois bars articulés à l'une de leurs extrémités (41) sur la caméra (36) ou son support et portant à leur autre extrémité une roulette rotative (42) autour d'un axe horizontal, la longueur du bras étant telle que lorsque la caméra est centrée la roulette (42) est en contact avec la paroi interne de l'enceinte (1) et des tiges articulées (43) à l'une de leurs extrémités sur les bras et à leur autre extrémité sur une pièce tubulaire (34) disposée autour du tube flexible (26) et d'un diamètre supérieur à ce tube flexible, pouvant être solidarisée ou au contraire désolidarisée de la base du guide tubulair (20) grâce à un ensemble de crochets (29) manoeuvrable depuis l'extérieur de l'enceinte (1).

3. Dispositif d'inspection télévisuelle suivant l'une quelconque des revendications 1 et 2, caractérisé par le fait que le tube flexible (26) est constitué par une gaine tubulaire en acier inoxydable présentant des ondes ayant pour axe l'axe du tube, aisément déformable en flexion mais rigide en torsion.

4. Dispositif d'inspection télévisuelle suivant l'une quelconque des revendications 1, 2 et 3, caractérisé par le fait que deux projecteurs (45) sont diposés de part et d'autre de la caméra (36) dans un plan horizontal disposé à la hauteur de l'objectif.

5. Dispositif d'inspection télévisuelle suivant l'une quelconque des revendications 1, 2, 3 et 4, caractérisé par le fait que le moyen d'eintrainement en rotation du tube flexible autour de son axe est un motoréducteur (46) entrainant un ensemble de pignons (47, 48) dont l'une est solidaire d'un équipage mobile (49) en rotation solidaire du tube flexible (26).

6. Dispositif d'inspection télévisuelle suivant la revendication 5, caractérisé par le fait que l'un des pignons (58) entrainé par le motoréducteur (46) est solidaire d'un dispositif de codage optique (60) servant à la détermination précise de la position angulaire de la caméra (36).

## Claims

1. Apparatus for television inspection of the inner surface of a closed cylindrical vessel with a vertical axis and an axis hole at its upper part, comprising a television camera and at least one projector for illuminating the region to be inspected fixed to suspension means comprising electrical supply cables of the camera and the lamp, characterised by the fact that it comprises:

— a flexible tube (20) at one end of which the camera (36) is suspended and through which the electrical supply cables pass,

— a rigid tubular guide (20) entering the vessel (1) via the access hole (2), whose end portion in the vessel (1) is vertical, to guide and orientate the flexible tube (26) over its course from the exterior to the interior of the vessel (1),

— a means (25) for rotating the flexible tube (26) about its axis, located outside the vessel (1),

— a means (51, 55, 56) for securing the tube (26) and the camera (36) against translatory movements, releasable for vertical displacement of the camera (36) and located outside the vessel (1),

— means (60 and 54) for accurate indicating of the angular position and vertical position of the camera (36),

— and a centring apparatus (40, 42, 43) located above the camera (36) free to rotate and bearing on the wall of the vessel (1), the flexible tube (26) being torsionally rigid to transmit the rotary movements of the drive means (25) to the camera (36) exactly.

2. Television inspection apparatus according to Claim 1, characterised by the fact that the centring apparatus borne by the camera is constituted by a set of arms (40) and preferably by three arms articulated at one of their ends (41) on the camera (36) or its support and bearing at their other end a roller (42) rotating about an horizontal axis, the length of the arm being such that, when the camera is centred, the roller (42) is in contact with the inner wall of the vessel (1) and rods (43) articulated at one of their ends on the arm and at their other end on a tubular piece (34) disposed about the flexible tube (26) and of a diameter greater than this flexible tube, capable of being made solid or conversely separate from the base of the tubular guide (20) by means of a set of hooks (29) operable from outside the vessel (1).

3. Television inspection apparatus according to either of Claims 1 or 2, characterised by the fact that the flexible tube (26) is constituted by a tubular casing of stainless steel with corrugations having the axis of the tube as axis, easily deformable in bending but torsionally rigid.

4. Television inspection apparatus according to any of Claims 1, 2 and 3, characterised by the fact that two projectors (45) are disposed either side of the camera (36) in an horizontal plane disposed at the height of the target.

5. Television inspection apparatus according to any of Claims 1, 2, 3, and 4, characterised by the fact that the means for rotating the flexible tube about its axis is a motor-reducing gear (46) driving a set of pinions (47, 48), one of which is solid with an apparatus (49) which is rotatable and solid with the flexible tube (26).

6. Television inspection apparatus according to Claim 5, characterised by the fact that one of the pinions (58) driven by the motor-reducing gear (46) is solid with an optical encoding apparatus (60) serving to determine the angular position of the camera (36) accurately.

**Patentanprüche**

1. Fernsehvorrichtung zur Prüfung der Innenfläche einer zylindrischen geschlossen Hülle mit vertikaler Achse und Zugangsöffnung am oberen Teil, bestehend aus einer Fernsehkamera und mindestens einem Scheinwerfer zur Beleuchtung der zu prüfenden Zone, wobei Kamera und Scheinwerfer an Aufhängungsmitteln befestigt sind, die die Stromversorgungskabel für Kamera und Scheinwerfer umfassen, dadurch gekennzeichnet, dass sie folgendermassen zusammengesetzt ist:

— ein biegsames Rohr (26), an dessen einem Ende die Kamera (36) aufgehängt ist, und durch das die Stromversorgungskabel geführt sind,

— eine durch die Zugangsöffnung (2) in die Hülle (1) eindringende starre rohrförmige Führung (20), deren Endabschnitt in der Hülle (1) senkrecht ist zur Führung und Ausrichtung des biegsamen Rohrs (26) auf seinem Weg von aussen ins Innere der Hülle (1),

— ein Mittel zum Antrieb der Drehbewegung (25) des biegsamen Rohrs (26) um seine Achse ausserhalb der Hülle (1),

— ein Rückhaltemittel (51, 55, 56) für das Rohr (26) und die Kamera (36) gegenüber den Translationsbewegungen, wobei dieses Mittel für die vertikale Bewegung der Kamera (36) gelöst werden kann und ausserhalb der Hülle (1) gelegen ist,

— Mittel (60 und 54) zur genauen Bestimmung der Winkelstellung und der vertikalen Stellung der Kamera (36)

— und eine oberhalb der Kamera (36) angeordnete Zentriervorrichtung (40, 42, 43) mit freier Drehbewegung, die auf der Wand der Hülle (1) aufliegt, wobei das biegsame Rohr (26) drehsteif ist, um genau die Drehbewegungen vom Antriebsmittel (25) auf die Kamera (36) zu übertragen.

2. Fernsehprüfvorrichtung nach Anspruch 1 dadurch gekennzeichnet, dass die von der Kamera getragene Zentriervorrichtung sich aus einer Armanordnung (40) und vorzugsweise aus drei Armen zusammensetzt, die an ihrem einem Ende (41) an der Kamera (36) oder an dem Kamerahalter angelenkt sind und am anderen Ende eine um eine horizontale Achse sich drehende Rolle (42) aufweisen, wobei die Länge des Arms so vorgesehen ist, dass, wenn die Kamera zentriert ist, die Rolle (42) die Innenwand der Hülle (1) berührt und Stäbe (43), die an ihrem einen Ende an den Armen angelenkt sind und am anderen Ende an einem rohrförmigen Stück (34), das um das biegsame Rohr (26) angeordnet ist und einen grösseren Durchmesser als dieses aufweist, wobei es unten an der rohrförmigen Führung (20) angeschlossen oder abgekuppelt werden kann dank einer von ausserhalb der Hülle (1) zu betätigenden Hakenanordnung (29).

3. Fernsehprüfvorrichtung nach einem der Ansprüche 1 und 2 dadurch gekennzeichnet, dass das biegsame Rohr (26) aus nichtrostendem Stahl ist mit Wellen, deren Achse der Rohrachse entspricht, und leicht verbogen werden kann, aber drehsteif ist.

4. Fernsehprüfvorrichtung nach einem der Ansprüche 1, 2 und 3 dadurch gekennzeichnet, dass zwei Scheinwerfer (45) zu beiden Seiten der Kamera (36) angeordnet sind in einer waagerechten Ebene auf der Höhe des Objektivs.

5. Fernsehprüfvorrichtung nach einem der Ansprüche 1, 2, 3 und 4 dadurch gekennzeichnet, dass das Antriebmittel für die Drehbewegung des biegsamen Rohrs aum seine Achse ein Getriebemotor (46) ist, der eine Ritzelanordnung (47, 48) antreibt, wobei ein Ritzel mit einem drehbeweglichen Organ (49) formschlüssig verbunden ist, das wiederum mit dem biegsamen Rohr (26) formschlüssig verbunden ist.

6. Fernsehprüfvorrichtung nach Anspruch 5 dadurch gekennzeichnet, dass eines der vom Getriebemotor (46) angetriebenen Ritzel (58) mit einem optischen Kodiergerät (60) formschlüssig verbunden ist, das der genauen Bestimmung der Winkelstellung der Kamera (36) dient.

FIG 1

0017 551

FIG 2

0017 551

0 017 551

FIG 3

FIG 4

FIG 5